# EUROPÄISCHE PATENTSCHRIFT

(11) **EP 0 658 574 B1**
(45) Veröffentlichungstag und Bekanntmachung des Hinweises auf die Patenterteilung: **03.06.1998**
(21) Anmeldenummer: 94119611.5
(22) Anmeldetag: 12.12.1994
(51) Int. Cl.: C08F 8/32, C09D 127/06

(54) **Verfahren zur Herstellung einer Plastisol-Zusammensetzung**
Process for producing a plastisol composition
Procédé pour produire une composition de plastisol

(30) Priorität: 15.12.1993 DE 4342672
(43) Veröffentlichungstag der Anmeldung: 21.06.1995
(73) Patentinhaber: AIR PRODUCTS AND CHEMICALS, INC., Allentown, PA 18195-1501 (US)
(72) Erfinder: van de Berg, Albert, D-52372 Kreuzau (DE); Fitzek, Doris, D-52353 Düren (DE)
(74) Vertreter: Kador & Partner

(56) Entgegenhaltungen:
- EP-A- 0 360 038
- EP-A- 0 378 205
- EP-A- 0 416 360
- EP-A- 0 558 047
- WO-A-90/01502
- US-A- 5 188 693

## Beschreibung

Die Erfindung betrifft ein Verfahren zur Herstellung einer Plastisol-Zusammensetzung.

Haftverbesserer bzw. Haftvermittler, im englischen Sprachgebrauch auch adhesion promotors genannt, finden vor allem Einsatz in den sogenannten Plastisolen. Bei diesen handelt es sich um pastenartige Dispersionen eines pulverförmigen feinteiligen Polymerisats in einem Weichmacher. Als Polymere seien hier vor allem Polyvinylchlorid, Polyvinylchloridcopolymere und Polyalkylenmethacrylate erwähnt.

Plastisole werden unter anderem für wärme- und schallisolierende Schichten, zum Verkleben und Abdichten von Werkstoffen, zum Schutz gegen Korrosion und Steinschlag, hier vor allem im Kraftfahrzeugbau durch Auftragung auf Metalloberflächen der verschiedensten Art eingesetzt. Plastisole haben an sich ein ziemlich schwaches Haftvermögen, das keineswegs den heutigen hohen Anforderungen entspricht. Ist z.B. nach Aufbringung der Schutzschicht die Haftung an bestimmten Stellen ungenügend oder lockert sie sich im Laufe der Zeit durch mechanische Beanspruchung, so kann das Metall schnell korrodieren.

Man kann zwischen Substraten wie Metalloberflächen und der Schutzschicht eine Klebeschicht vorsehen, was aber mit einer ganzen Reihe von Nachteilen verbunden ist. Vorteilhafter ist es jedoch, dem Plastisol einen Haftverbesserer oder Haftvermittler beizufügen, wodurch das Plastisolgemisch dann selbst besser haftet.

Der Haftverbesserer, der in das Plastisol eingearbeitet wird, bevor das Plastisol auf die zu beschichtende Unterlage gebracht wird, soll aber nicht nur die Haftung verbessern, er soll auch zur Verbesserung der Verarbeitbarkeit der Plastisole beitragen, er soll außerdem thermisch so stabil sein, daß es beim Einbrennen der Beschichtung nicht zu unerwünschten Verfärbungen kommt. Außerdem sollte der Haftvermittler es ermöglichen, mit möglichst niedrigen Einbrenntemperaturen und möglichst kurzen Einbrennzeiten auszukommen. Ferner sollte er so effizient sein, daß diese und andere Ziele mit möglichst geringen Einsatzmengen erreicht werden.

Die meisten Haftverbesserer, wie sie auf dem Markt sind und auch in der sehr umfangreichen Patent- und Fachzeitschriften-Literatur beschrieben werden, werden hergestellt auf der Basis von polymerisierten ungesättigten Fettsäuren und Polyaminen. Durch Kondensation der polymerisierten Fettsäuren und der Amine entstehen sogenannte Polyaminoamide mit alternierendem Polymeraufbau.

Es hat nicht an Versuchen gefehlt, die Herstellung der Polyaminoamide, die für diesen speziellen Zweck zum Einsatz gelangen, zu verbessern, sei es, daß man das Verhältnis an Monomeren, Dimeren und Trimeren, aus denen sich die ungesättigten Fettsäuren zusammensetzen, veränderte, sei es, daß man den chemischen Aufbau auf sonstige Weise veränderte, z.B. durch Einsatz von anderen Aminen.

In diesem Zusammenhang seien beispielsweise die europäische Patentanmeldung 171 850 zitiert, die Haftverbesserer auf der Basis von polymerisierten Fettsäuren einer bestimmten Zusammensetzung und 1,0 bis 2,2 Äquivalenten eines heterocyclischen Amins beschreibt, oder die europäische Patentanmeldung 378 205, deren Lehre es ist, Gemische von Polyalkylenpolyaminen und N-Aminoalkylpiperazin zum Aufbau der Polyaminoamide einzusetzen.

Die ungesättigten Fettsäuren sind Naturprodukte, deren Zusammensetzung Schwankungen unterworfen ist. Auch ist die Herstellung der Polyaminoamide nicht immer beherrschbar.

Derartigen Produkten haftet unter anderem der Nachteil an, daß sie gegenüber thermischer Beanspruchung bisweilen die erforderliche Stabilität vermissen lassen; häufig kommt es bei der Polymerisation bzw. Kondensation zu unkontrollierbaren Reaktionsverläufen, so daß es schwierig bzw. unmöglich ist, ein Polymer eines bestimmten Molekulargewichts aufzubauen, das sich noch verarbeiten läßt. Auch läßt die Haftung und die Farbstabilität zum Teil zu wünschen übrig.

Man hat auch versucht, vollsynthetische Haftverbesserer aufzubauen, die, da sie nicht aus uneinheitlichen Naturprodukten sondern aus chemisch genau definierten Verbindungen aufgebaut werden, auch mit ziemlicher Sicherheit reproduzierbar herstellbar sind. So werden in der kanadischen Patentanmeldung 2.035.538 Haftverbesserer beschrieben, bei denen es sich um Copolymere von aliphatisch olefinisch ungesättigten Verbindungen und einem Anhydrid handelt. Die aliphatisch ungesättigten Verbindungen können auch α-Olefine und das Anhydrid kann Maleinsäureanhydrid sein. Die in dieser Patentanmeldung beschriebenen Haftverbesserer lassen, jedoch verglichen mit den Haftvermittlern auf der Basis von Polyaminen und polymerisierten Fettsäuren, hinsichtlich der Verbesserung des Haftvermögens noch zu wünschen übrig.

Obwohl bereits zahlreiche Haftverbesserer bekannt sind, besteht noch ein Bedürfnis nach Haftverbesserern mit verbesserten Eigenschaften wie Haftvermittlungsvermögen, Effizienz, thermischer Stabilität, Farbbeständigkeit, Verarbeitbarkeit, sowie vorteilhaften Herstellungsmethoden.

Aufgabe der Erfindung ist es, eine Plastisol-Zusammensetzung zur Verfügung zu stellen, die bereits bei milden Einbrennbedingungen gut haftet, eine günstige Verarbeitbarkeit und ein günstiges Fließverhalten besitzt, thermisch stabil ist und eine unbeeinträchtigte Plastisolfarbe aufweist und die sich mit einstellbaren Eigenschaftsprofilen reproduzierbar herstellen läßt.

Diese Aufgabe wird durch das im Anspruch 1 angegebene Verfahren gelöst. Die ethylenisch ungesättigten Verbindungen sind vorzugsweise α - β-ungesättigte Verbindungen; diese sind bevorzugt hydrophob. Besonders geeignet sind α-Olefine, Vinylether und Allylether, auch kann Styrol verwendet werden. Das Polyamin weist vorzugsweise mindestens eine primäre Aminogruppe auf.

Bei den ethylenisch ungesättigten Verbindungen, welche zum Aufbau des Copolymers aus einfach ungesättigten Carbonsäuren oder deren Derivate dient, handelt es sich um α - β-ungesättigte Verbindungen. Diese Verbindungen sind vorzugsweise hydrophob, d.h. sie haben in β-Stellung einen hydrophoben Rest. Vorzugsweise werden α-Olefine eingesetzt. Sehr geeignet sind auch Vinylether wie beispielsweise Vinyloctadecylether, sowie entsprechende Allylether, ferner Styrol.

Copolymere aus α-Olefinen mit 10 bis 24 Kohlenstoffatomen sind besonders vorteilhaft. Vorzugsweise werden Copolymere aus Maleinsäure, Maleinsäureanhydrid und Fumarsäure und α-Olefinen verwendet. Sehr vorteilhaft sind auch Copolymere auf der Basis von Acrylsäure, Methacrylsäure und deren Ester und α-Olefinen.

Eine Reihe von bevorzugt verwendeten copolymeren Amidoaminen, Imidoaminen und Esteraminen läßt sich durch die folgenden Formeln I, II und III darstellen: 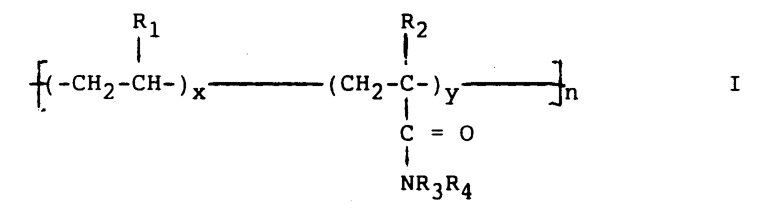 wobei
X = 1; y = 1 - 4; n = 5 - 50; R₁ = C₆ - C₂₂ - Alkyl
R₂ = H, CH₃; R₃ = H oder C₁ - C₃ Alkyl und R₄ ein eine oder mehrere Amingruppen aufweisender Kohlenwasserstoffrest mit 2 bis 14 Kohlenstoffatomen ist
   oder R₃ und R₄ mit dem Amidstickstoffatom einen Piperazinring bilden; 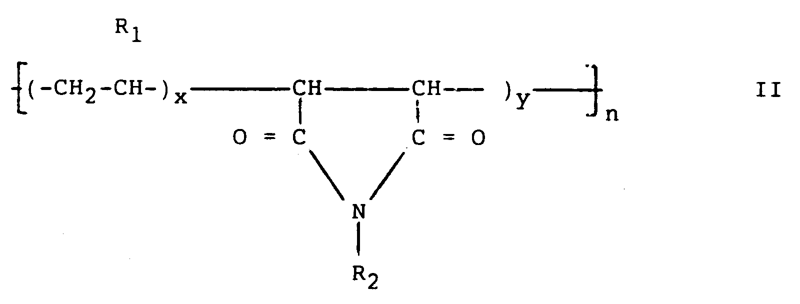 wobei
x = 1; y = 1 - 2; n = 5 - 50;
R₁ = C₈ - C₂₂-Alkyl
R₂ ein eine oder mehrere Amingruppen aufweisender Kohlenwasserstoffrest mit 2 bis 14 Kohlenstoffatomen ist; 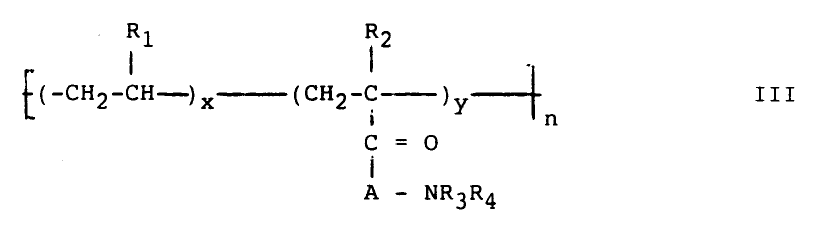 wobei
x = 1; y = 1 - 4; n = 5 - 50;
R₁ = C₈ - C₂₂-Alkyl, R₂ = H, CH₃
A = -OCH₂CH(OH)-CH₂-
R₃ und R₄ bzw. R₃ + R₄ die zu Formel I gegebene Bedeutung haben.

Ein Verfahren zur Herstellung von Imidoaminen besteht darin, daß man Copolymere von α - β-ungesättigten Verbindungen, vorzugsweise α-Olefinen und ungesättigten Dicarbonsäuren bzw. deren Anhydrid zunächst mit einem Alkohol umsetzt und den erhaltenen polymeren Ester durch Umsetzung mit Polyaminen zum Imidoamin umsetzt. Das Imid wird vorzugsweise in situ gebildet.

Die Herstellung der Imidoamine kann auf folgende Weise geschehen. Zunächst wird ein Copolymer auf an sich bekannte Weise aus einer ethylenisch ungesättigten Verbindung, insbesondere α-Olefinen und einer ungesättigten Dicarbonsäure bzw. einem Anhydrid der ungesättigten Carbonsäure hergestellt. Als α-Olefine eignen sich besonders Olefine mit 10 bis 24 Kohlenstoffatomen. Auch α-Olefine mit weniger als 10 oder mehr als 24 Kohlenstoffatomen können eingesetzt werden, z.B. 1-Hexen oder ein α-Olefin mit 30 Kohlenstoffatomen. Auch Gemische oder Schnitte von α-Olefinen sind geeignet.

Als ungesättigte Dicarbonsäure bzw. deren Anhydrid ist besonders Maleinsäure geeignet.

Das Copolymer wird sodann entweder zunächst mit Alkoholen wie Butanol, Isooctanol oder Benzylalkohol zum entsprechenden Ester umgesetzt und sodann durch weitere Zugabe eines Polyamins in ein Imid umgewandelt.

Es war besonders überraschend, daß diese Herstellungsweise zu einem stabilen Produkt führt, das sehr einheitlich aufgebaut ist. Besonders vorteilhaft dabei ist, daß eine Gelbildung, die bisweilen bei der direkten Umsetzung des copolymeren Anhydrids bzw. der copolymeren Säure zu beoabachten ist, nicht stattfindet.

Bei Gelbildung steigt nämlich die Viskosität des Reaktionsgemisches sehr stark an, was zu großen Problemen bei der Produktion führen kann, insbesondere weil schlechte Durchmischung und Wärmeaustausch zu einem sehr uneinheitliches Produkt führen können.

Möglicherweise wird diese nachteilige Erscheinung durch eine Amidsäure bewirkt, die als Zwischenprodukt bei der Umsetzung von copolymeren Anhydriden oder copolymeren Säuren mit den Polyaminen entsteht.

Die Herstellung eines polymeren Imidoamins auf Basis von α-Olefin-Maleinsäureanhydrid-Copolymer wird im folgenden Beispiel beschrieben.

### Beispiel 1

Polymeres Imidoamin auf Basis von Olefin/Maleinsäureanhydrid Copolymer, Isooctanol und N-Aminoethylpiperazin.

1780 g C_{14/16}-alpha-Olefin (8.7 Mol) werden in einem 5 l Quickfitkolben vorgelegt, mit N₂ gespült und auf 150°C aufgeheizt. Anschließend werden unter Rühren innerhalb von 250 min 10 Portionen Maleinsäureanhydrid (853 g, 8.7 Mol) und Di-tert-butylperoxid (34 ml) zugegeben. Nach einer Nachreaktion von 60 min werden die Zersetzungsprodukte des Starters abdestilliert (100 mbar, 150°C, 45 min). Das erhaltene Polymer ergibt als 50%ige Lösung in Xylol bei 40°C eine Viskosität von 53 mm²/s (cSt).

67.5 g (0.223 Mol) des erhaltenen copolymeren Anhydrids werden in 73 g Xylol und 58.1 g (0.446 Mol) Isooctanol unter Rückfluß gelöst. Danach werden 28.8 g (0.223 mol) N-Aminoethylpiperazin innerhalb von 5 min bei ca. 145°C zugetropft, wobei kontinuierlich Wasser ausgekreist wird. Nach weiteren 90 min Reaktionszeit waren ca. 4 ml Wasser ausgekreist. Danach wurde das Produkt in 130 g Dioctylphthalat gelöst und Lösemittel und Alkohol im Vakuum abgetrennt (150°C, 10 mbar). Die erhaltene ca. 41%ige braungelbe Lösung (222 g) hatte eine Viskosität (Ubbelohde) bei 25°C von 3400 mm²/s (cSt).

Die Copolymeren von einfach ungesättigten Carbonsäuren oder deren Derivate und α-Olefinen sind an sich bekannt und werden nach üblichen Polymerisationsmethoden hergestellt.

Als α-Olefine können übliche lineare oder verzweigte Verbindungen eingesetzt werden wie z.B. α-Hexen, α-Octen oder auch Olefine mit höheren Molekulargewichten wie α-Hexadecen u. dgl. Bevorzugt werden α-Olefine mit 10 bis 24 Kohlenstoffatomen verwendet. Auch Gemische oder die kommerziell verfügbaren Schnitte sind sehr geeignet.

Als weiteres Comonomer werden einfach ungesättigte Carbonsäuren oder deren Derivate eingesetzt. Zur Herstellung von Amidoaminen und Esteraminen, welche erfindungsgemäß verwendet werden, werden insbesondere einfach ungesättigte Monocarbonsäuren wie Acrylsäure, Methacrylsäure, Crotonsäure bzw. deren Ester wie Methyl und Ethylester eingesetzt.

Für den Aufbau der erfindungsgemäß verwendeten Imidoamine werden als zweites Comonomer einfach ungesättigte Dicarbonsäuren bzw. deren Derivate, insbesondere deren Anhydride eingesetzt. Hier ist vor allem Maleinsäure, Maleinsäureanhydrid oder Fumarsäure zu nennen.

In einer besonders vorteilhaften Ausführungsform werden als Comonomer Glycidylester von einfach ungesättigten Monocarbonsäuren verwendet wie z.B. Glycidylmethacrylat.

Derartige Produkte können im Handel bezogen werden, z.B. durch die Firma Marubeni Deutschland GmbH Düsseldorf unter der Handelsbezeichnung Blemmer G oder die Firma Röhm GmbH Chemische Fabrik, Darmstadt (Deutschland) unter der Handelsbezeichnung GMA.

Die Copolymere werden sodann mit Polyaminen umgesetzt. Dabei entstehen aus Copolymeren von Acrylsäure, Methacrylsäure oder deren Methyl- oder Ethylester Amidoamine durch Reaktion der Amingruppe mit der Säure- bzw. der Esterfunktion. Im Falle von Copolymeren von Glycidylacrylaten entstehen durch die Reaktion der Amingruppe mit der Epoxygruppe Esteramine. Bei Copolymeren, in denen Maleinsäureanhydrid und analoge Verbindungen eingebaut sind, reagiert die primäre Amingruppe unter Bildung des Imids.

Es war besonders überraschend, daß es mittels der Erfindung möglich ist, bereits bei geringen Einsatzmengen des Haftvermittlers eine sehr gute Haftung zu erzielen. Die Haftvermittler sind thermisch sehr stabil und beeinträchtigen die Plastisolfarbe in geringerem Maße als das sonst der Fall ist. Die Haftvermittler lassen sich reproduzierbar herstellen. Insbesondere ist es möglich, durch gezielten chemischen Aufbau des Haftvermittlers diesen für die verschiedensten Einsatzzwecke zuzuschneiden. Man kann deshalb die Eigenschaftsprofile nach den Wünschen des Kunden variieren.

Dies ist von großer Bedeutung, da die Zusammensetzung der Plastisole von Kunde zu Kunde variiert. So ist es möglich gemäß der Erfindung Haftvermittler zu verwenden, die in dem jeweils eingesetzten Weichmacher besonders gut löslich sind. Auch weichmacherfreie Verwendungen sind möglich.

Die Verwendung der Haftvermittler gemäß der Erfindung ist nicht nur möglich in Plastisolen, welche auf der Basis von Polyvinylchlorid oder Copolymeren des Vinylchlorids hergestellt worden sind. Sie können vielmehr auch in Plastisolen eingesetzt werden, die auf Basis anderer Polymere bereitet worden ist. Hier sind insbesondere Polyalkylenmethacrylate zu nennen.

### Olefin Copolymere

Die Copolymere setzen sich zusammen aus insbesondere langkettigen α-Olefinen (bzw. Olefinschnitten) mit C-Zahlen von C₁₀-C₂₄ und einem ungesättigten (olefinischen) Comonomer wie Acrylsäure oder Methacrylsäure bzw. Acrylsäureester oder Methacrylsäureester wie z.B. von C₁ bis C₄-Alkoholen oder Glycidylacrylat oder -methacrylat oder einem ungesättigten Comonomer wie Maleinsäure, Maleinsäureanhydrid, Fumarsäure bzw. deren Ester. Sie werden hergestellt durch radikalische Copolymerisation der Monomere in Masse oder in Lösung bei 80 - 200°C vorzugsweise 100 - 160°C. Die Molgewichte der Copolymere liegen im allgemeinen zwischen 2 000 - 20 000 vorzugsweise zwischen 3000 - 10 000.

Die Copolymere sind je nach Molgewicht, Olefin-C-Zahl und Art des Comonomers viskose Flüssigkeiten bis spröde Feststoffe.

Das Comonomeren-Verhältnis der Olefin/Maleinsäureanhydrid-Copolymere liegt vorzugsweise bei 1/1 - 1/2 bzw. für die Olefin/Acrylat-Copolymere bei 1/1 - 1/4.

### Copolymere Imidoamine bzw. Amidoamine

Die in der ersten Stufe hergestellten Copolymere werden durch Umsetzungen mit Polyaminen in Masse oder Lösungsmittel umgesetzt. Die **Imidierung** z.B. der Maleinsäureanhydrid-Copolymere erfolgt bei beispielsweise 130 - 180°C in einem Lösemittel wie z.B. Xylol unter azeotroper Entfernung des Reaktionswassers mit einem entsprechenden Amin im molaren Verhältnis von Anhydrid/Amin wie 1/0.5 - 1/5, wobei der Überschuß Amin bevorzugt wird im Fall von Aminen mit mehr als einer primären Aminogruppe. Der Einsatz eines Säurekatalysators wie p-TSA begünstigt die Imidbildung.

Die **Amidierung** der Acrylsäureester-Copolymere erfolgt bei 150 - 220°C in Lösung oder lösemittelfrei unter Abspaltung des Esteralkohols und Zugabe des entsprechenden Amins im molaren Verhältnis von Ester/Amin wie 1/1 - 1/5.

Unter Polyaminen sind Verbindungen mit mindestens zwei Aminogruppen zu verstehen.

Geeignete Polyamine für die Imidierung/Amidierung bzw. Esteraminbildung sind aliphatische Polyamine, die gegebenenfalls Heteroatome enthalten, wie Polyoxyalkylenpolyamine, Polyalkylenamine wie Ethylendiamin, Diethylentriamin, Triethylentetramin, Tripropylentetramin, Tetraethylenpentamin, Pentaethylenhexamin, Hexamethylendiamin, Dimethylaminopropylamin, cycloaliphatische Polyamine wie 3,3'-Dimethyl-4,4'-diaminodicyclohexylmethan und Isophorondiamin und heterocyclische Polyamine wie N-Aminoethylpiperazin und Xylylendiamin.

Von diesen und ähnlichen Verbindungen leiten sich auch die in den Formeln I, II und III wiedergegebenen Amingruppen aufweisenden Reste ab.

Nach Abschluß der Imidierung bzw. Amidierung werden bei erhöhter Temperatur und/oder vermindertem Druck flüchtige Anteile wie Lösemittel, überschüssiges Amin, Alkohol und Zersetzungsprodukte abgetrennt und das erhaltene Polymer gegebenenfalls in einem Weichmacher bzw. Lösemittel (z.B. Dioctylphthalat, Benzylalkohol, Diisopropylnaphthalin) gelöst.

### Verfahren zur Herstellung von Überzügen

Die nach dem obigen Verfahren hergestellten Haftvermittler gelöst in Weichmacher oder Lösemittel werden in 0.1-5 Gew.% (bezogen auf die Gesamtformulierung) üblichen PVC-Plastisolen (feinteiliges Polyvinylchlorid, übliche Weichmacher, Füllstoffe, Additive) bei Raumtemperatur zugesetzt.

Die erfindungsgemäßen Plastisole, aufgebracht auf metallischen Substraten, die gegebenenfalls beschichtet sind (z.B. mit KTL-Beschichtung), werden nach üblichen Einbrennbedingungen (90 - 170°C; 10 - 30 min) zu festhaftenden Überzügen eingebrannt.

### Herstellung der Haftvermittler

### Beispiel 2

Polymeres Imdoamin auf Basis von Olefin/Maleinsäureanhydrid Copolymer und N-Aminoethylpiperazin.

1 780 g C_{14/16}-alpha-Olefin (8.7 Mol) werden mit 560 g Xylol in einem 5 l-Quickfitkolben vorgelegt, mit N₂ gespült und auf 140°C aufgeheizt. Anschließend werden unter Rühren innerhalb von 150 min 30 Portionen Maleinsäureanhydrid (853 g, 8.7 Mol) und Di-tert.-butylperoxid (43 ml) zugegeben.
Nach einer Nachreaktion von 60 min werden die Zersetzungsprodukte des Starters, Lösemittel und freies Olefin abdestilliert (190°C, 25 mbar). Das erhaltene Polymer (2 500 g) hatte ein Molgewicht von 7 500 (GPC) und einen Schmelzbereich von 91 - 97°C.

170 g (0.6 Mol) des erhaltenen copolymeren Anhydrids werden in 300 g Xylol gelöst und in eine ca. 140°C heiße Lösung aus 85 g (0.6 Mol) N-Aminoethylpiperazin, 160 g Xylol und 1 g p-TSA dosiert (60 min), wobei kontinuierlich Wasser bei Xylol-Rückfluß ausgekreist wird. Nach weiteren 120 min Reaktionszeit wird das Lösemittel und freies Amin abgetrennt und das verbleibende polymere Imidoamin (247 g, Fp: 40 - 45°C) bei 150°C in 370 g Diisopropylnaphthalin gelöst. Die erhaltene 40%ige braune, leicht trübe Lösung (Produkt A) hatte eine kinematische Viskosität (Ubbelohde) bei 25°C von 12 000 mm²/s (cSt).

### Beispiel 3

Polymeres Amidoamin auf Basis von Olefin/Methylacrylat Copolymer und Dimethylaminopropylamin.

785 g C₁₄-alpha-Olefin (4 Mol) werden mit 1 000 g Xylol in einen 5 l-Quickfitkolben vorgelegt, mit N₂ gespült und auf 100°C aufgeheizt. Anschließend wird unter Rühren innerhalb von 180 min eine Lösung aus 689 g Methylacrylat (8 Mol) und 80 ml Starter (tert. Butylperoxy-2-ethylhexanoat) zugegeben. Nach einer Nachreaktion von 60 min werden Zersetzungsprodukte des Starters, Lösemittel und freies Olefin abdestilliert (200°C, 25 mbar). Das erhaltene Polymer (1 150 g) hatte ein Molgewicht von 4 500 (GPC) und eine kinematische Viskosität von 8 800 mm²/s (cSt) bei 40°C. Das Monomerverhältnis von Olefin zu Methylacrylat betrug 1 : 3.1).

159 g (1 Mol) des erhaltenen copolymeren Methylacrylat und 408 g (4 Mol) Dimethylaminopropylamin werden in einen 1 l Autoklaven gegeben und unter Rühren auf 180°C erhitzt. Nach 20 h Reaktionszeit werden bei 180°C und 25 mbar Methanol und überschüssiges Amin abgetrennt. Das erhaltene bei Raumtemperatur klare Polymer (229 g) mit einem Schmelzbereich von 36 - 37°C wurde bei 120°C in 229 g Dioctylphthalat gelöst. Die erhaltene 50%ige braune klare Lösung (Produkt B) hatte eine kinematische Viskosität (Ubbelohde) bei 40°C von 16 000 mm²s (cSt).

### Herstellung der Plastisole

### Beispiel 4

Zu 100 g Plastisol, bestehend aus
100 Teilen verpastbarem PVC mit K-Wert 70
125 Teilen Dioctylphthalat
80 Teilen Füllstoff, Kreide
3 Teilen dreibasisches Bleisulfat
werden 0.5 g, 1 g und 2 g der Haftvermittlerlösung gemäß Beispiel 2 oder 3 (Produkt A oder B) zugesetzt.

### Charakterisierung der Plastisole

Die mit den Haftvermittlerlösungen A und B hergestellten erfindungsgemäßen Plastisole wurden im Vergleich zum haftvermittlerfreien Plastisol (Blank) und einem Referenzprodukt aus der Klasse "Polyaminoamid" im Hinblick auf rheologische Eigenschaften (Fließgrenze, Thixotropie, Strukturviskosität), Lagerstabilität und Eigenschaften des eingebrannten Compounds wie Haftfestigkeit auf einem KTL-Blech (Typ: BASF Serie 7628) und Compound-Verfärbung (Y_{I}: Yellowness Index) als Funktion der Haftvermittlermenge untersucht.

Die aufgeführten Beispiele stehen stellvertretend für andere Repräsentanten der erfindungsgemäßen Haftvermittlerklasse, anderen üblichen Plastisolformulierungen und KTL-Blechen.

Die haftvermittlerhaltigen Plastisole wurden mit einem Rakel (10 x 2 mm Breite x Höhe) als Streifen auf dem KTL-Blech aufgebracht und bei 130°C und 160°C und 20 min Einbrennzeit ausgehärtet. Nach 60minütiger Abkühlzeit wurde die Haftfestigkeit per Hand (Skala 1 - 4) und der Yellowness Index der 160°C-Probe bestimmt.

**Tabelle**

| Haftvermittler Typ | Menge (%) | Haftfestigkeit¹⁾ | | Farbe²⁾ (YI) 160°C |
|---|---|---|---|---|
| | | 130°C | 160°C | |
| Blank | - | 1 | 1 | 20 |
| Referenz³⁾ | 0.5 | 1 | 2 | 50 |
| | 1.0 | 2 | 3-4 | 72 |
| | 2.0 | 3 | 4 | 83 |
| A | 0.3 | 3 | 3-4 | 37 |
| | 0.5 | 3 | 4 | 44 |
| | 1.0 | 3 | 4 | 51 |
| | 2.0 | 2 | 4 | 73 |
| B | 0.3 | 3 | 3 | 39 |
| | 0.5 | 3 | 4 | 46 |
| | 1.0 | 3 | 4 | 62 |

| | | | | |
|---|---|---|---|---|
| ¹⁾Haftfestigkeit: 1. keine Haftung, extrem leichtes Ablösung möglich. 2. geringe Haftung, ohne Rückstand ablösbar. 3. gute Haftung, Compound ablösbar, verbleibt aber teilweise auf dem Substrat. 4. maximale Haftung, Compound nicht ohne Zerstörung ablösbar. | | | | |
| ²⁾Yellowness Index Y_{I} nach DIN 6167 des bei 160°C Einbrenntemperatur erhaltenen Compounds. | | | | |
| ³⁾Polyaminoamid auf Basis von dimerer/trimerer Fettsäure und Triäthylentetramin (40% Lösung). | | | | |

Die Tabelle belegt die hohe Effizienz der Haftvermittler A und B (0.5 Gewichtsteile der Haftvermittlerlösung ergeben bei 160°C Einbrenntemperatur maximale Haftung) bei geringer Compound-Verfärbung.

Weiterhin wurden die erfindungsgemäßen Plastisole (Beispiel A) im Vergleich zum Referenzprodukt bei gleicher Einsatzkonzentration (1%, 40%ige Lösung) rheologisch vor dem Einbrennen mittels eines Rotationsviskosimeters bei 20°C als Funktion der Lagerzeit charakterisiert.

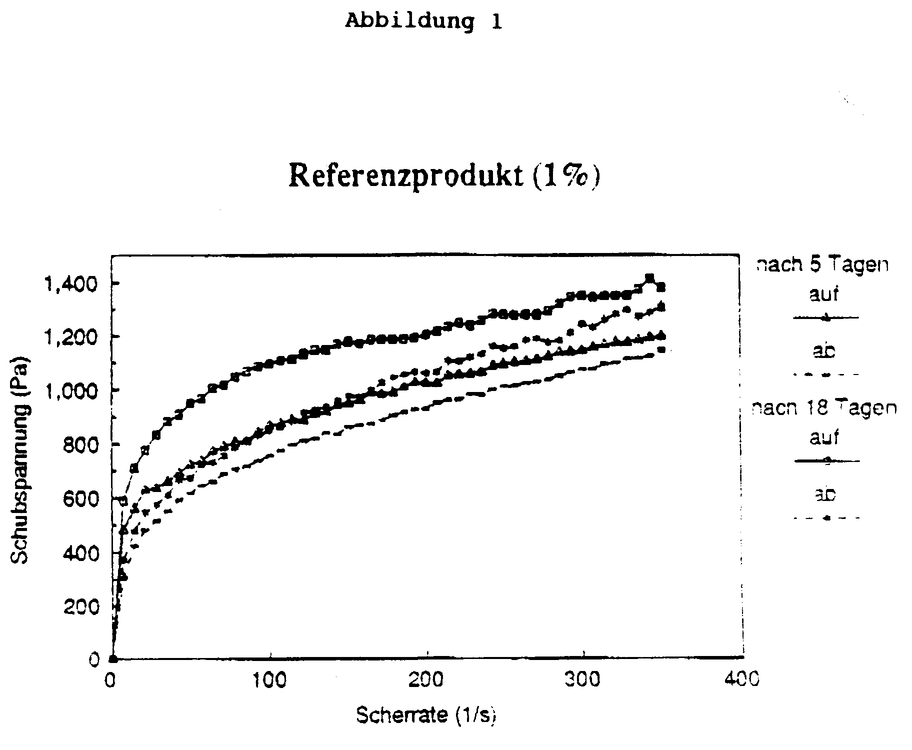

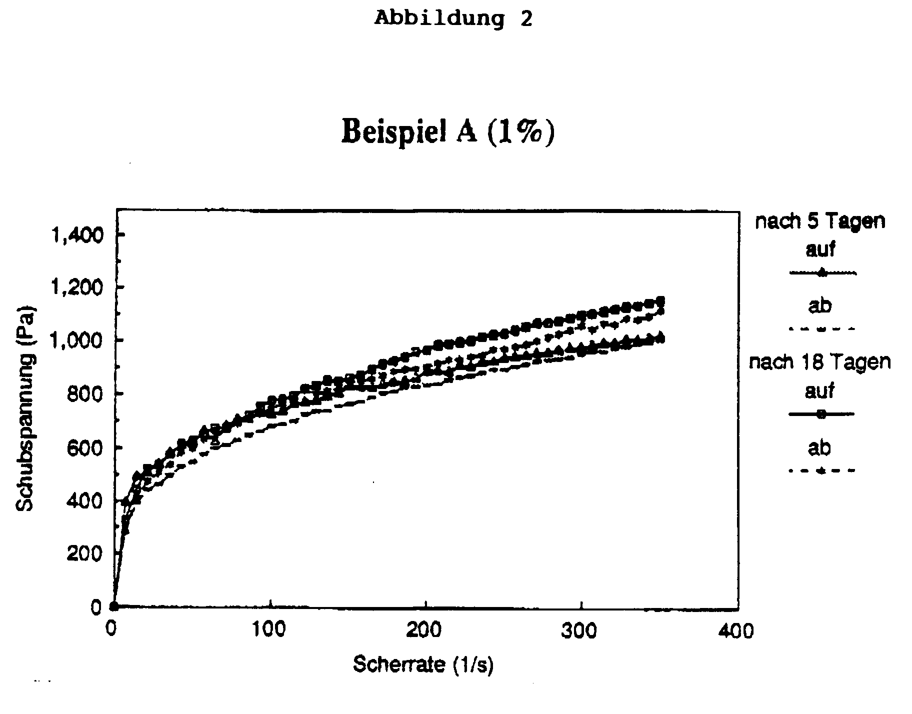

Wie die Abbildungen zeigen, vermindert der erfindungsgemäße Haftvermittler A im Vergleich zum Referenzprodukt die Compound-Thixotropie und verbessert die Compound-Lagerstabilität.

## Patentansprüche

1. Verfahren zur Herstellung einer Plastisol-Zusammensetzung, **dadurch gekennzeichnet,** daß 0,1 - 5 Gew.-%, bezogen auf das Gewicht der gesamten Plastisol-Zusammensetzung, eines Haftverbesserers, der aus einer Gruppe ausgewählt wird, die aus Amidoaminen, Imidoaminen und Esteraminen besteht, zu einem Platisol gegeben wird, welches Polyvinylchlorid, Polyvinylchloridcopolymere und Polyalkylenmethacrylat in einem Weichmacher umfaßt, um die Plastisol-Zusammensetzung zu bilden, wobei der Haftverbesserer ein Produkt ist aus
der Reaktion wenigstens einer ethylenisch ungesättigten Verbindung, welche ein Styrol, ein α-Olefin, ein Vinylether oder ein Allylether ist, mit wenigstens einer einfach ungesättigten Carbonsäure oder einem einfach ungesättigten Carbonsäure-Derivat, um ein Copolymeres zu bilden;
Reaktion des Copolymeren mit wenigstens einem Polyamin mit wenigstens einer primären Aminogruppe, um den Haftverbesserer zu bilden.

2. Verfahren nach Anspruch 1, **dadurch gekennzeichnet,** daß das α-Olefin 10 bis 24 Kohlenstoffatome aufweist.

3. Verfahren nach Anspruch 1, **dadurch gekennzeichnet,** daß die einfach ungesättigte Carbonsäure oder deren Derivat Acrylsäure, Methacrylsäure bzw. deren Methyl- oder Ethylester ist.

4. Verfahren nach Anspruch 1 oder 2, **dadurch gekennzeichnet,** daß die einfach ungesättigte Carbonsäure Maleinsäure, Maleinsäureanhydrid oder Fumarsäure ist.

5. Verfahren nach Anspruch 1 oder 2, **dadurch gekennzeichnet,** daß das Derivat der einfach ungesättigten Carbonsäure Glycidylester ist.

6. Verfahren nach einem der Ansprüche 1 bis 6, **dadurch gekennzeichnet,** daß das Polyamin N-Aminoethylpiperazin ist.

7. Verfahren nach Anspruch 2, **dadurch gekennzeichnet,** daß das gebildete Copolymer eine der folgenden Formeln aufweist: 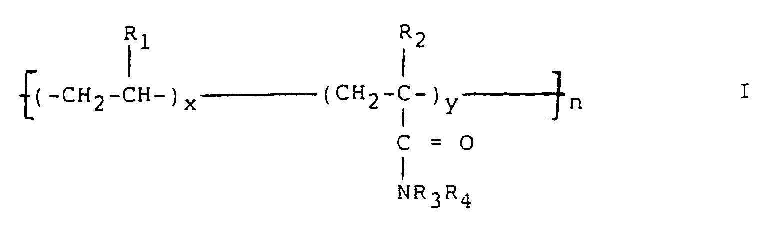 wobei
X = 1;y = 1 - 4;n = 5 - 50;
R₁ = C₆ - C₂₂ - Alkyl
R₂ = H, CH₃; R₃ = H oder C - C₃ Alkyl und R₄ ein eine oder mehrere Amingruppen aufweisender Kohlenwasserstoffrest mit 2 bis 14 Kohlenstoffatomen ist oder R₃ und R₄ mit dem Amidstickstoffatom einen Piperazinring bilden: 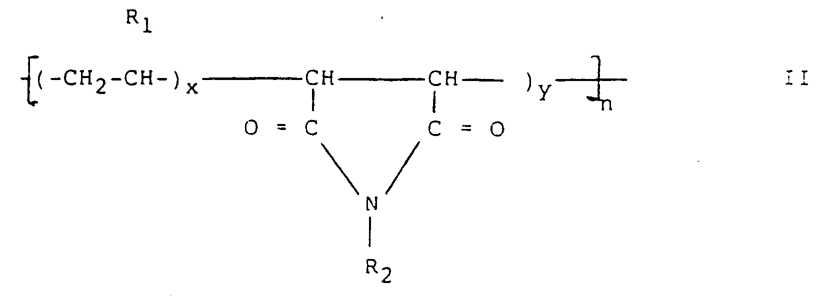 wobei
x = 1;y = 1 - 2;n = 5 - 50;
R₁ = C₈ - C₂₂-Alkyl
R₂ ein eine oder mehrere Amingruppen aufweisender Kohlenwasserstoffrest mit 2 bis 14 Kohlenstoffatomen ist:

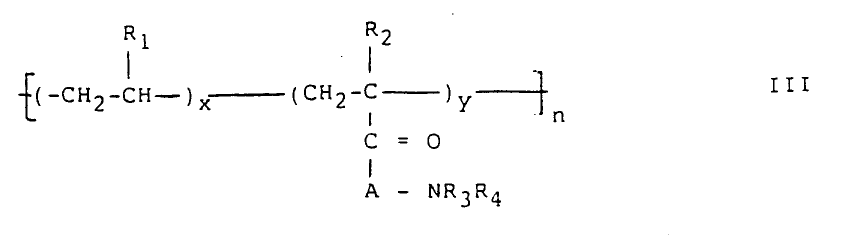

8. Verfahren nach einem der vorstehenden Ansprüche, **dadurch gekennzeichnet,** daß der Haftverbesserer ein Imidoamin ist, das das Produkt ist aus
der Reaktion eines α-Olefins mit 10 bis 24 Kohlenstoffatomen mit Maleinsäure, Maleinsäureanhydrid oder Fumarsäure, um ein Copolymer zu bilden; und
der Reaktion des Copolymeren mit wenigstens einem Polyamin mit wenigstens einer primären Aminogruppe.

9. Verfahren nach Anspruch 8, **dadurch gekennzeichnet,** daß das Copolymere ein Reaktionsprodukt aus einem α-Olefin mit 14 bis 16 Kohlenstoffatomen und Maleinsäureanhydrid ist, wobei das Copolymere dann mit N-Aminoethylpiperazin umgesetzt wird.

## Claims

1. A process for producing a plastisol composition, characterized in that 0.1 to 5 wt%, based on the weight of the total plastisol composition, of an adhesion promoter selected from a group consisting of amido amines, imido amines and ester amines is added to a plastisol comprising polyvinyl chloride, polyvinyl chloride copolymers and polyalkylene methacrylate in a plasticizer in order to form the plastisol composition, the adhesion promoter being a product from
the reaction of at least one ethylenically unsaturated compound which is a styrene, an α-olefin, a vinyl ether or an allyl ether, with at least one monounsaturated carboxylic acid or monounsaturated carboxylic acid derivative in order to form a copolymer;
reaction of the copolymer with at least one polyamine with at least one primary amino group in order to form the adhesion promoter.

2. The process of claim 1, characterized in that the α-olefin has 10 to 24 carbon atoms.

3. The process of claim 1, characterized in that the monounsaturated carboxylic acid or derivative thereof is acrylic acid, methacrylic acid or the methyl or ethyl ester thereof.

4. The process of claim 1 or 2, characterized in that the monounsaturated carboxylic acid is maleic acid, maleic anhydride or fumaric acid.

5. The process of claim 1 or 2, characterized in that the derivative of the monounsaturated carboxylic acid is glycidyl ester.

6. The process of any of claims 1 to 6, characterized in that the polyamine is N-aminoethylpiperazine.

7. The process of claim 2, characterized in that the formed copolymer has one of the following formulas: 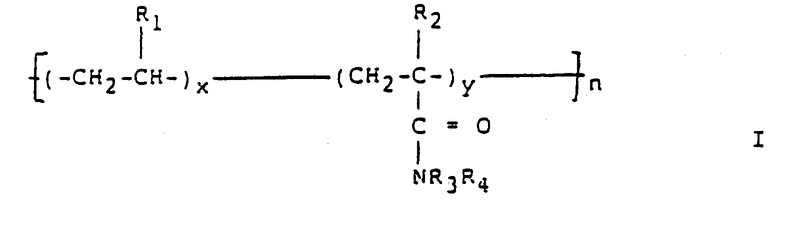 where
X = 1; y = 1 - 4; n = 5 - 50;
R₁ = C₆ - C₂₂ alkyl
R₂ = H, CH₃; R₃ = H or C - C₃ alkyl and R₄ is a hydrocarbon residue with 2 to 14 carbon atoms and having one or more amino groups, or R₃ and R₄ form with the amide nitrogen atom a piperazine ring: 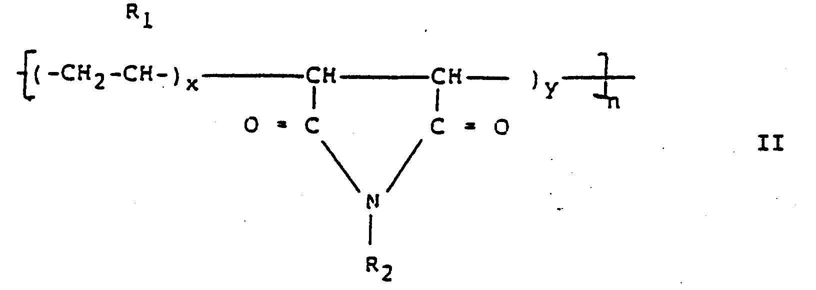 where
x = 1; y = 1 - 2; n = 5 - 50;
R₁ = C₈ - C₂₂ alkyl
R₂ is a hydrocarbon residue with 2 to 14 carbon atoms and having one or more amino groups:

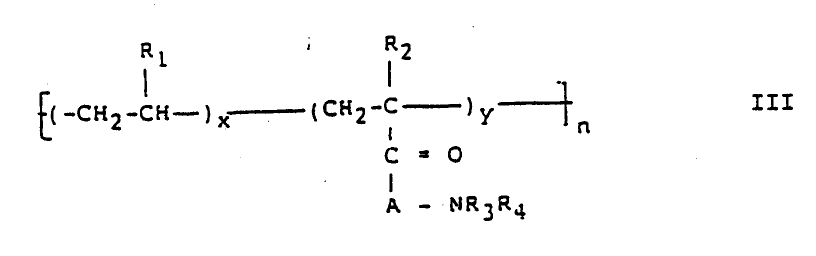

8. The process of any of the above claims, characterized in that the adhesion promoter is an imido amine which is the product from
the reaction of an α-olefin with 10 to 24 carbon atoms with maleic acid, maleic anhydride or fumaric acid in order to form a copolymer; and
the reaction of the copolymer with at least one polyamine with at least one primary amino group.

9. The process of claim 8, characterized in that the copolymer is a reaction product from an α-olefin with 14 to 16 carbon atoms and maleic anhydride, the copolymer then being reacted with N-aminoethylpiperazine.

## Revendications

1. Procédé de préparation d'une composition de plastisol, caractérisé en ce que l'on ajoute 0,1 à 5 % en masse, par rapport à la masse de toute la composition de plastisol, d'un accélérateur d'adhérence choisi dans un groupe constitué par des amidoamines, des imidoamines et des esteramines, à un plastisol comprenant du poly(chlorure de vinyle), des copolymères de poly(chlorure de vinyle) et du poly(méthacrylate d'alkylène) dans un plastifiant, pour former la composition de plastisol, l'accélérateur d'adhérence étant obtenu par
la réaction d'au moins un composé à insaturation éthylénique, qui est un styrène, une α-oléfine, un éther vinylique ou un éther allylique, avec au moins un acide carboxylique mono-insaturé ou un dérivé d'acide carboxylique mono-insaturé, qui donne un copolymère;
la réaction du copolymère avec au moins une polyamine contenant au moins un groupe amino primaire, qui donne l'accélérateur d'adhérence.

2. Procédé selon la revendication 1, caractérisé en ce que l'α-oléfine contient 10 à 24 atomes de carbone.

3. Procédé selon la revendication 1, caractérisé en ce que l'acide carboxylique mono-insaturé ou son dérivé est l'acide acrylique, l'acide méthacrylique ou leurs esters méthyliques ou éthyliques.

4. Procédé selon la revendication 1 ou 2, caractérisé en ce que l'acide carboxylique mono-insaturé est l'acide maléique, l'anhydride maléique ou l'acide fumarique.

5. Procédé selon la revendication 1 ou 2, caractérisé en ce que le dérivé de l'acide carboxylique mono-insaturé est un ester glycidylique.

6. Procédé selon l'une des revendications 1 à 6, caractérisé en ce que la polyamine est la N-aminoéthylpipérazine.

7. Procédé selon la revendication 2, caractérisé en ce que le copolymère formé a l'une des formules suivantes: 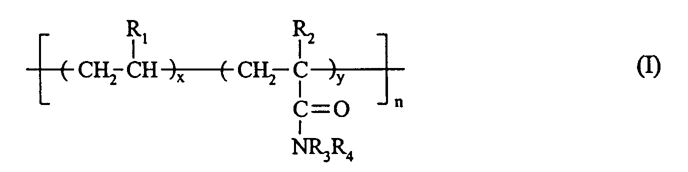 dans laquelle
x = 1; y = 1 - 4; n = 5 - 50;
R₁ = alkyle en C₆-C₂₂;
R₂ = H, CH₃;
R₃ = H ou alkyle en C₁-C₃ et R₄ est un reste hydrocarboné de 2 à 14 atomes de carbone contenant un ou plusieurs groupes amine,
ou R₃ et R₄ forment avec l'atome d'azote de l'amide un noyau pipérazine; 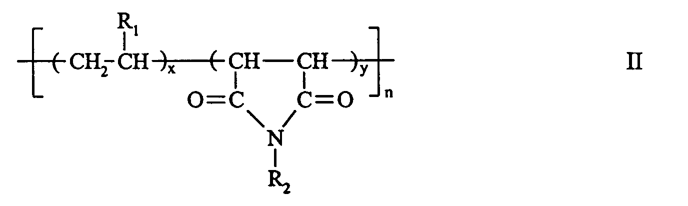 dans laquelle
x = 1; y = 1 - 2; n = 5 - 50;
R₁ = alkyle en C₈-C₂₂;
R₂ est un reste hydrocarboné de 2 à 14 atomes de carbone contenant un ou plusieurs groupes amine;

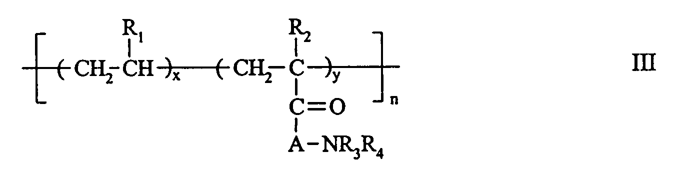

8. Procédé selon l'une des revendications précédentes, caractérisé en ce que l'accélérateur d'adhérence est une imidoamine qui est le produit de
la réaction d'une α-oléfine de 10 à 24 atomes de carbone avec de l'acide maléique, de l'anhydride maléique ou de l'acide fumarique, qui donne un copolymère; et
la réaction du copolymère avec au moins une polyamine contenant au moins un groupe amino primaire.

9. Procédé selon la revendication 8, caractérisé en ce que le copolymère est un produit de réaction d'une α-oléfine de 14 à 16 atomes de carbone et d'anhydride maléique, le copolymère étant ensuite mis à réagir avec la N-aminoéthylpipérazine.
